# EUROPEAN PATENT APPLICATION

(11) **EP 4 502 924 A1**
(43) Date of publication of application: **05.02.2025**
(21) Application number: 22935361.0
(22) Date of filing: 30.03.2022
(51) Int. Cl.: G06T 7/00

(54) **INFORMATION PROCESSING PROGRAM, INFORMATION PROCESSING METHOD, AND INFORMATION PROCESSING DEVICE**

(71) Applicant: FUJITSU LIMITED, Kawasaki-shi, Kanagawa 211-8588 (JP)
(72) Inventor: ODASHIMA, Shigeyuki, Kawasaki-shi, Kanagawa 211-8588 (JP); YAMAO, Sosuke, Kawasaki-shi, Kanagawa 211-8588 (JP); SUZUKI, Tatsuya, Kawasaki-shi, Kanagawa 211-8588 (JP); YANG, Fan, Kawasaki-shi, Kanagawa 211-8588 (JP); MASUI, Shoichi, Kawasaki-shi, Kanagawa 211-8588 (JP); JIANG, Shan, Kawasaki-shi, Kanagawa 211-8588 (JP)
(74) Representative: Hoffmann Eitle
(86) International application number: PCT/JP2022/016363
(87) International publication number: WO 2023/188216

(57) **Abstract**

An information processing device (100) specifies any one portion in an abnormal state regarding a position, for skeleton information (101) at a first time point in time-series data, based on a feature amount regarding the skeleton information (101) in the time-series data. The information processing device (100) determines a model of a probability distribution that restricts a position of the specified any one portion, in the skeleton information (101) at the first time point, according to a magnitude of a probability that the portion is in the abnormal state. The information processing device (100) generates a graph (110) that includes a node (111) indicating a position of each portion at each time point and a first edge (112) and in which the determined model is associated with the node (111) indicating the position of the specified any one portion. The information processing device (100) corrects the skeleton information (101) at the first time point in the time-series data, based on the generated graph (110).

## Description

### TECHNICAL FIELD

The present invention relates to an information processing program, an information processing method, and an information processing device.

### BACKGROUND ART

Typically, a technology is desired for recognizing a motion of a person, in fields of sports, health care, or entertainment. For example, there is a technology for specifying three-dimensional coordinates of each joint of a person, based on multi-viewpoint images captured from different angles, using deep learning.

As related art, for example, there is a technology for outputting any one of a result of first processing, a result of second processing, and a result of third processing, as a skeleton recognition result of a subject, based on a likelihood of the result of the first processing, a likelihood of the result of the second processing, and a likelihood of the result of the third processing. Furthermore, for example, there is a technology for recognizing a heat map image projecting likelihoods of a plurality of joint positions of a subject from a plurality of directions, from a distance image of the subject. Furthermore, for example, there is a technology for performing optimization calculation based on inverse kinematics using a position candidate of a feature point and a multi-joint structure of a target, acquiring each joint angle of the target, performing forward kinematics calculation using the joint angle, and acquiring a position of a feature point including the joint of the target. Furthermore, for example, there is a behavior detection technology using a recurrent neural network.

### CITATION LIST

### PATENT DOCUMENT

International Publication Pamphlet No. WO 2021/064942 International Publication Pamphlet No. WO 2021/002025 Japanese Laid-open Patent Publication No. 2020-42476 U.S. Patent Application Publication No. 2017/0344829

### SUMMARY OF INVENTION

### TECHNICAL PROBLEM

However, there is a case where it is difficult for the related art to accurately specify the three-dimensional coordinates of each joint of the person. For example, the three-dimensional coordinates of the joint of the right hand of the person may be erroneously identified as the three-dimensional coordinates of the joint of the left hand of the person. For example, there is a case where three-dimensional coordinates of a part of an object other than a person imaged in a multi-viewpoint image is erroneously recognized as the three-dimensional coordinates of the joint of the person.

In one aspect, an object of the present invention is to enable to accurately specify a position of a portion of a subject.

### SOLUTION TO PROBLEM

In one aspect of the embodiment, an information processing program, an information processing method, and an information processing device are proposed that acquire time-series data of skeleton information that includes a position of each of a plurality of portions of a subject, specify any one portion in an abnormal state regarding a position, for skeleton information at a first time point in the acquired time-series data, based on a feature amount regarding the skeleton information in the acquired time-series data, determine a model of a probability distribution that restricts a position of the specified any one portion, in the skeleton information at the first time point, based on the feature amount regarding the skeleton information in the acquired time-series data, according to a magnitude of a probability that the specified any one portion is in the abnormal state, generate a graph that includes a node that indicates a position of each portion at each time point and a first edge that couples between nodes indicating positions of different portions biologically connected at each time point and in which the determined model is associated with the node that indicates the position of the any one portion, and correct the skeleton information at the first time point in the time-series data, based on the generated graph.

### ADVANTAGEOUS EFFECTS OF INVENTION

According to one aspect, it is possible to accurately specify a position of a portion of a subject.

### BRIEF DESCRIPTION OF DRAWINGS

FIG. 1 is an explanatory diagram illustrating an example of an information processing method according to an embodiment.
FIG. 2 is an explanatory diagram illustrating an example of an information processing system 200.
FIG. 3 is a block diagram illustrating a hardware configuration example of an information processing device 100.
FIG. 4 is a block diagram illustrating a hardware configuration example of an image capturing device 201.
FIG. 5 is a block diagram illustrating a functional configuration example of the information processing device 100.
FIG. 6 is an explanatory diagram illustrating a flow of an operation of the information processing device 100.
FIG. 7 is an explanatory diagram (part 1) illustrating a specific example for specifying an abnormal joint.
FIG. 8 is an explanatory diagram (part 2) illustrating the specific example for specifying the abnormal joint.
FIG. 9 is an explanatory diagram illustrating a specific example for generating Factor Graph 900.
FIG. 10 is an explanatory diagram illustrating a specific example for correcting a 3D skeleton inference result 602.
FIG. 11 is an explanatory diagram (part 1) illustrating a specific example of a flow of data processing in an operation example.
FIG. 12 is an explanatory diagram (part 2) illustrating the specific example of the flow of the data processing in the operation example.
FIG. 13 is a flowchart illustrating an example of an overall processing procedure.

### DESCRIPTION OF EMBODIMENTS

Hereinafter, an embodiment of an information processing program, an information processing method, and an information processing device according to the present invention will be described in detail, with reference to the drawings.

### (Example of Information Processing Method According to Embodiment)

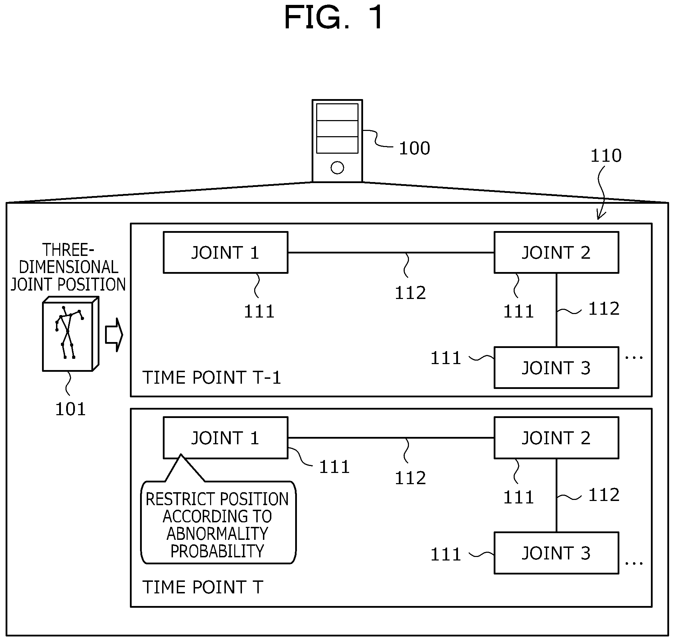

FIG. 1 is an explanatory diagram illustrating an example of an information processing method according to an embodiment. An information processing device 100 is a computer that enables to accurately specify a position of a joint of a subject. The subject is, for example, a person. The position is, for example, three-dimensional coordinates.

Typically, there is a technology for specifying a temporal change in three-dimensional coordinates of each joint of a person, by specifying the three-dimensional coordinates of each joint of the person, based on a multi-viewpoint image imaged from different angles, at each time point, using deep learning.

Specifically, it is considered to detect a region where a person is imaged, in the multi-viewpoint image, specify two-dimensional coordinates of each joint of the person based on the detected region, and specify the three-dimensional coordinates of each joint of the person, based on the specified two-dimensional coordinates, in consideration of the angle. Specifically, when the three-dimensional coordinates of each joint of the person are specified, a model trained using the deep learning is used. Regarding an example of this technology, specifically, Reference Documents 1 and 2 below can be referred.

Reference Document 1: Iskakov, Karim, et al. "Learnable triangulation of human pose." Proceedings of the IEEE/CVF International Conference on Computer Vision. 2019.

Reference Document 2: Moon, Gyeongsik, Ju Yong Chang, and Kyoung Mu Lee. "V2v-posenet: Voxel-to-voxel prediction network for accurate 3d hand and human pose estimation from a single depth map." Proceedings of the IEEE conference on computer vision and pattern Recognition. 2018.

However, there is a case where it is difficult for the related art to accurately specify the three-dimensional coordinates of each joint of the person. For example, although a distance between the joints of the same person is constant at different time points, when a model is trained by the deep learning, it is not considered that a distance between the joints of the person is constant. Therefore, it is not possible to accurately specify the three-dimensional coordinates of each joint of the person, and it is not possible to accurately specify a temporal change in the three-dimensional coordinates of each joint of the person.

When referring to the specified three-dimensional coordinates of each joint of the person, an analyst who analyzes a motion of a person tends to intuitively have an impression that the three-dimensional coordinates of each joint of the person are wrong. Specifically, the analyst has an impression that an arm length of the person extends or shortens. Furthermore, specifically, the analyst has an impression that the arm of the person is moving at a speed that a human cannot achieve.

Therefore, in the present embodiment, an information processing method that enables to accurately specify the position of the joint of the subject will be described.

In FIG. 1, (1-1) the information processing device 100 acquires time-series data of skeleton information 101. The skeleton information 101 includes, for example, a position of each of a plurality of portions of the subject. The portion is, for example, a neck, a head, a right shoulder and a left shoulder, a right elbow and a left elbow, a right hand and a left hand, a right knee and a left knee, a right foot and a left foot, or the like. The portion is, specifically, a joint. In the example in FIG. 1, specifically, the portion is a joint 1, a joint 2, a joint 3, or the like. The position is, for example, three-dimensional coordinates. The time-series data includes, for example, the skeleton information 101 at each time point. In the example in FIG. 1, the time-series data specifically includes skeleton information 101 at a time point T, skeleton information 101 at a time point T-1, or the like.

(1-2) The information processing device 100 specifies any one portion in an abnormal state regarding the position, for the skeleton information 101 at the first time point in the acquired time-series data, based on a feature amount regarding the skeleton information 101 in the acquired time-series data. The feature amount may be, for example, the position of each portion of the subject indicated by the skeleton information 101. The feature amount may be, for example, a deviation of the positions of each portion of the subject indicated by the skeleton information 101 at different time points. The feature amount may be, for example, a distance between positions of different portions of the subject indicated by the skeleton information 101.

For example, the information processing device 100 includes a first model that specifies any one portion in the abnormal state regarding the position, from among the plurality of portions of the subject. The first model has, for example, a function that enables to calculate a magnitude of a probability that a position of each of the plurality of portions of the subject is in the abnormal state, according to an input of the feature amount regarding the skeleton information 101 and to determine whether or not the position of each portion is in the abnormal state. For example, the information processing device 100 specifies any one portion in the abnormal state regarding the position, for the skeleton information 101 at the first time point in the acquired time-series data, using the first model.
(1-3) The information processing device 100 determines a second model, based on the feature amount regarding the skeleton information 101 in the acquired time-series data. For example, the information processing device 100 determines a second model of a probability distribution that restricts the position of the specified any one portion according to the magnitude of the probability that the portion is in the abnormal state, in the skeleton information 101 at the first time point. The probability is calculated by the first model, for example, based on the feature amount regarding the skeleton information 101 in the time-series data. In the example in FIG. 1, specifically, the information processing device 100 determines the second model of the probability distribution that restricts a position of the joint 1 according to the magnitude of the probability that the joint 1 is in an abnormal state, in the skeleton information 101 at the time point T.
(1-4) The information processing device 100 generates a graph 110 including a node 111 indicating a position of each portion at each time point and a first edge 112 that couples between nodes indicating positions of different portions biologically connected at each time point. When generating the graph 110, the information processing device 100 associates the determined second model with the node 111 indicating the position of the specified any one portion. In the example in FIG. 1, specifically, the information processing device 100 generates the graph 110 by associating the determined second model with the node 111 indicating the position of the joint 1 of the subject at the time point T.
(1-5) The information processing device 100 corrects the skeleton information 101 at the first time point in the time-series data, based on the generated graph 110. For example, the information processing device 100 corrects the position of the joint 1 of the subject included in the skeleton information 101 at the time point T in the time-series data. As a result, the information processing device 100 can accurately specify the position of each joint of the subject. The information processing device 100 can accurately specify the temporal change in the position of each joint of the subject.

Here, a case has been described where the information processing device 100 specifies any one portion in the abnormal state regarding the position, for the skeleton information 101 at the first time point in the time-series data, using the first model. However, the present embodiment is not limited to this. For example, there may be a case where the information processing device 100 specifies any one portion in the abnormal state regarding the position, for the skeleton information 101 at the first time point, in the time-series data, without using the first model.

Although a case where the information processing device 100 operates alone has been described herein, the embodiment is not limited to this. For example, there may be a case where a plurality of computers cooperates to implement a function as the information processing device 100. Specifically, there may be a case where a computer that specifies any one portion in the abnormal state regarding the position, a computer that generates the graph 110, and a computer that corrects the skeleton information 101 at the first time point in the time-series data, based on the graph 110 cooperate with each other.

### (Example of Information Processing System 200)

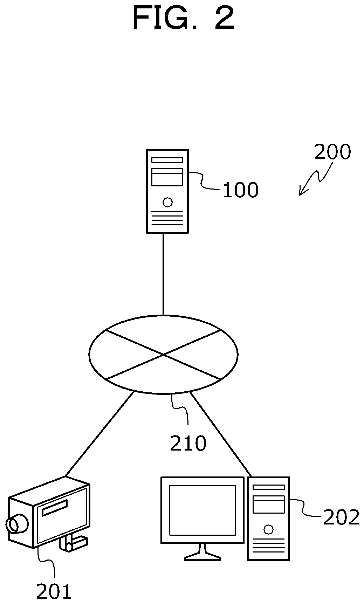

Next, an example of an information processing system 200, to which the information processing device 100 illustrated in FIG. 1, is applied will be described with reference to FIG. 2.

FIG. 2 is an explanatory diagram illustrating an example of the information processing system 200. In FIG. 2, the information processing system 200 includes the information processing device 100, one or more image capturing devices 201, and one or more client devices 202.

In the information processing system 200, the information processing device 100 and the image capturing device 201 are coupled via a wired or wireless network 210. The network 210 is, for example, a local area network (LAN), a wide area network (WAN), the Internet, or the like. Furthermore, in the information processing system 200, the information processing device 100 and the client device 202 are coupled via the wired or wireless network 210.

The information processing device 100 acquires a plurality of images obtained by imaging the subject from different angles at each time point, from the one or more image capturing devices 201. The information processing device 100 specifies a distribution of an existence probability of each portion of the subject in a three-dimensional space, based on the plurality of acquired images, at each time point and specifies three-dimensional coordinates of each portion of the subject. The information processing device 100 calculates an abnormal degree of each portion of the subject regarding the three-dimensional coordinates, based on the plurality of acquired images, at each time point, and specifies any one portion of the subject as an abnormal portion in an abnormal state regarding the three-dimensional coordinates.

The information processing device 100 determines a model of a probability distribution that restricts a position of the specified abnormal portion, based on the calculated abnormal degree. The information processing device 100 generates a graph that includes a node indicating the specified three-dimensional coordinates of each portion of the subject at each time point and an edge that couples between the nodes, and in which the node indicating the three-dimensional coordinates of the abnormal portion is associated with the determined model. The information processing device 100 corrects the specified three-dimensional coordinates of each portion of the subject, with reference to the graph.

The information processing device 100 outputs the corrected three-dimensional coordinates of each portion of the subject. An output format is, for example, display on a display, print output to a printer, transmission to another computer, storage in a storage region, or the like. For example, the information processing device 100 transmits the corrected three-dimensional coordinates of each portion of the subject, to the client device 202. For example, the information processing device 100 is a server, a personal computer (PC), or the like.

The image capturing device 201 is a computer that images the subject. The image capturing device 201 includes a camera including a plurality of imaging elements and images the subject with the camera. The image capturing device 201 generates an image obtained by imaging the subject and transmits the image to the information processing device 100. The image capturing device 201 is, for example, a smartphone or the like. The image capturing device 201 may be, for example, a fixed point camera or the like. The image capturing device 201 may be, for example, a drone or the like.

The client device 202 receives the three-dimensional coordinates of each portion of the subject, from the information processing device 100. The client device 202 outputs the received three-dimensional coordinates of each portion of the subject to be referred by a user. The client device 202 displays, for example, the received three-dimensional coordinates of each portion of the subject, on a display. The client device 202 is, for example, a PC, a tablet terminal, a smartphone, or the like.

Although a case where the information processing device 100 is a different device from the image capturing device 201 has been described herein, the present embodiment is not limited to this. For example, there may be a case where the information processing device 100 has the functions of the image capturing device 201, and also operates as the image capturing device 201. Although a case where the information processing device 100 and the client device 202 are different devices has been described herein, the present embodiment is not limited to this. For example, there may be a case where the information processing device 100 has the functions as the client device 202, and also operates as the client device 202.

### (Hardware Configuration Example of Information Processing Device 100)

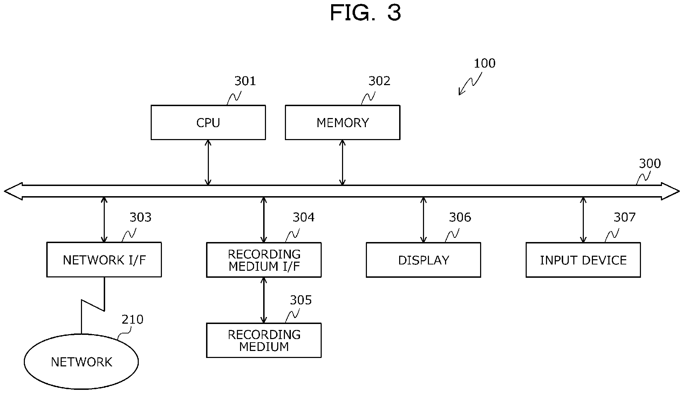

Next, a hardware configuration example of the information processing device 100 will be described with reference to FIG. 3.

FIG. 3 is a block diagram illustrating the hardware configuration example of the information processing device 100. In FIG. 3, the information processing device 100 includes a central processing unit (CPU) 301, a memory 302, a network interface (I/F) 303, a recording medium I/F 304, and a recording medium 305. The information processing device 100 further includes a display 306 and an input device 307. Furthermore, the components are coupled to each other by a bus 300.

Here, the CPU 301 controls the entire information processing device 100. The memory 302 includes, for example, a read only memory (ROM), a random access memory (RAM), a flash ROM, or the like. Specifically, for example, the flash ROM or the ROM stores various programs, and the RAM is used as a work area for the CPU 301. The programs stored in the memory 302 are loaded into the CPU 301 to cause the CPU 301 to execute coded processing.

The network I/F 303 is coupled to the network 210 through a communication line and is coupled to another computer via the network 210. Then, the network I/F 303 takes control of an interface between the network 210 and the inside, and controls input and output of data to and from the another computer. For example, the network I/F 303 is a modem, a LAN adapter, or the like.

The recording medium I/F 304 controls reading and writing of data from and to the recording medium 305 under the control of the CPU 301. Examples of the recording medium I/F 304 include a disk drive, a solid state drive (SSD), a universal serial bus (USB) port, or the like. The recording medium 305 is a nonvolatile memory that stores data written under the control of the recording medium I/F 304. Examples of the recording medium 305 include a disk, a semiconductor memory, a USB memory, or the like. The recording medium 305 may be attachable to and detachable from the information processing device 100.

The display 306 displays data of a cursor, an icon, a toolbox, a document, an image, function information, or the like. The display 306 is a cathode ray tube (CRT), a liquid crystal display, an organic electroluminescence (EL) display, or the like, for example. The input device 307 has keys for inputting characters, numbers, various instructions, or the like, and inputs data. The input device 307 is a keyboard, a mouse, or the like, for example. The input device 307 may be a touch-panel input pad, a numeric keypad, or the like, for example.

The information processing device 100 may include a camera or the like, for example, in addition to the above components. Furthermore, the information processing device 100 may also include a printer, a scanner, a microphone, a speaker, or the like, for example, in addition to the above components. In addition, the information processing device 100 may include the plurality of recording medium I/Fs 304 and the plurality of recording media 305. Furthermore, the information processing device 100 does not need to include the display 306, the input device 307, or the like. Furthermore, the information processing device 100 does not need to include the recording medium I/F 304 and the recording medium 305.

### (Hardware Configuration Example of Image Capturing Device 201)

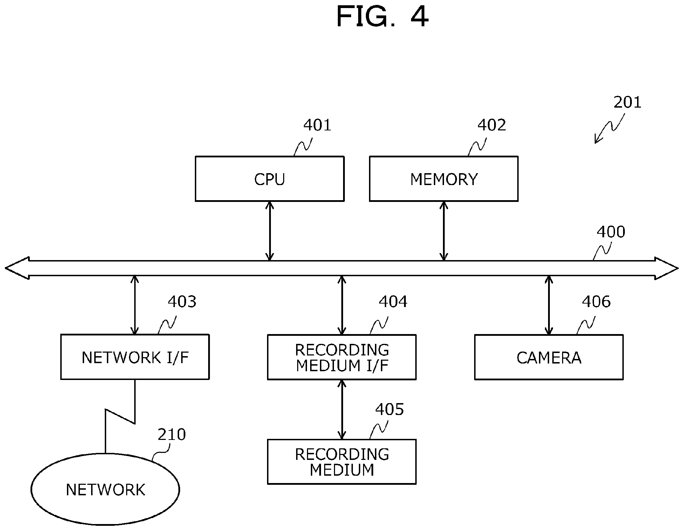

Next, a hardware configuration example of the image capturing device 201 will be described with reference to FIG. 4.

FIG. 4 is a block diagram illustrating the hardware configuration example of the image capturing device 201. In FIG. 4, the image capturing device 201 includes a CPU 401, a memory 402, a network I/F 403, a recording medium I/F 404, a recording medium 405, and a camera 406. Furthermore, the components are coupled to each other by a bus 400.

Here, the CPU 401 controls the entire image capturing device 201. The memory 402 includes, for example, a ROM, a RAM, a flash ROM, or the like. Specifically, for example, the flash ROM or the ROM stores various programs, and the RAM is used as a work area for the CPU 401. The programs stored in the memory 402 are loaded into the CPU 401 to cause the CPU 401 to execute coded processing.

The network I/F 403 is coupled to the network 210 through a communication line, and is coupled to another computer via the network 210. Then, the network I/F 403 takes control of an interface between the network 210 and the inside, and controls input and output of data to and from the another computer. For example, the network I/F 403 is a modem, a LAN adapter, or the like.

The recording medium I/F 404 controls reading and writing of data from and to the recording medium 405 under the control of the CPU 401. The recording medium I/F 404 is, for example, a disk drive, an SSD, a USB port, or the like. The recording medium 405 is a nonvolatile memory that stores data written under control of the recording medium I/F 404. The recording medium 405 is, for example, a disk, a semiconductor memory, a USB memory, or the like. The recording medium 405 may be attachable to and detachable from the image capturing device 201. The camera 406 includes a plurality of imaging elements and generates an image obtained by imaging an object with the plurality of imaging elements. The camera 406 is, for example, a camera for competitions. The camera 406 is, for example, a monitoring camera.

The image capturing device 201 may include, in addition to the above components, a keyboard, a mouse, a display, a printer, a scanner, a microphone, a speaker, or the like, for example. Furthermore, the image capturing device 201 may include the plurality of recording medium I/Fs 404 and the plurality of recording media 405. Furthermore, the image capturing device 201 does not need to include the recording medium I/F 404 and the recording medium 405.

### (Hardware Configuration Example of Client Device 202)

Since a hardware configuration example of the client device 202 is specifically similar to the hardware configuration example of the information processing device 100 illustrated in FIG. 3, the description thereof will be omitted.

### (Functional Configuration Example of Information Processing Device 100)

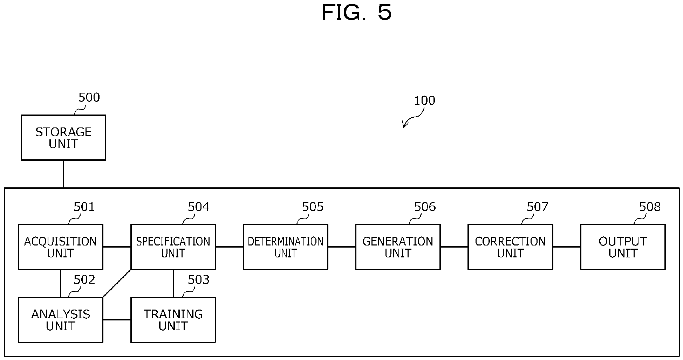

Next, a functional configuration example of the information processing device 100 will be described with reference to FIG. 5.

FIG. 5 is a block diagram illustrating the functional configuration example of the information processing device 100. The information processing device 100 includes a storage unit 500, an acquisition unit 501, an analysis unit 502, a training unit 503, a specification unit 504, a determination unit 505, a generation unit 506, a correction unit 507, and an output unit 508.

For example, the storage unit 500 is implemented by a storage region such as the memory 302 or the recording medium 305 illustrated in FIG. 3. Hereinafter, a case will be described where the storage unit 500 is included in the information processing device 100. However, the present embodiment is not limited to this. For example, there may be a case where the storage unit 500 is included in a device different from the information processing device 100, and storage content of the storage unit 500 may be referred from the information processing device 100.

The acquisition unit 501 to the output unit 508 function as an example of a control unit. Specifically, for example, the acquisition unit 501 to the output unit 508 implement functions thereof by causing the CPU 301 to execute a program stored in the storage region such as the memory 302 or the recording medium 305 illustrated in FIG. 3, or by the network I/F 303. A processing result of each functional unit is stored in, for example, the storage region such as the memory 302 or the recording medium 305 illustrated in FIG. 3.

The storage unit 500 stores various types of information referred to or updated in the processing of each functional unit. For example, the storage unit 500 stores a plurality of images obtained by imaging a specific person from different angles at each of a plurality of consecutive time points. The angle indicates an imaging position. The image is acquired, for example, by the acquisition unit 501.

The storage unit 500 stores, for example, time-series data of skeleton information. The time-series data includes skeleton information at each of the plurality of consecutive time points. The skeleton information includes a position of each of a plurality of portions of the specific person. The portion is, for example, a joint. The portion is, for example, a neck, a head, a right shoulder and a left shoulder, a right elbow and a left elbow, a right hand and a left hand, a right knee and a left knee, a right foot and a left foot, or the like. The position is, for example, three-dimensional coordinates. The time-series data is acquired, for example, by the acquisition unit 501. The time-series data may be generated, for example, by the analysis unit 502.

The acquisition unit 501 acquires various types of information to be used for the processing of each functional unit. The acquisition unit 501 stores the acquired various types of information in the storage unit 500, or outputs the acquired various types of information to each functional unit. Furthermore, the acquisition unit 501 may output the various types of information stored in the storage unit 500 to each functional unit. The acquisition unit 501 acquires the various types of information based on an operation input by the user, for example. The acquisition unit 501 may receive various types of information from a device different from the information processing device 100, for example.

The acquisition unit 501 acquires, for example, the time-series data of the skeleton information of the subject. The skeleton information of the subject includes, for example, the position of each of the plurality of portions of the subject. Specifically, the acquisition unit 501 acquires the time-series data of the skeleton information of the subject, by receiving an input of the time-series data of the skeleton information of the subject, based on the operation input of the user. Specifically, the acquisition unit 501 may acquire the time-series data of the skeleton information of the subject by receiving the time-series data from another computer.

The acquisition unit 501 may acquire, for example, time-series data of skeleton information of a test subject in the past. The test subject may be, for example, the same as the subject. The skeleton information of the test subject includes, for example, a position of each of a plurality of portions of the test subject. Specifically, the acquisition unit 501 acquires the time-series data of the skeleton information of the test subject, by receiving an input of the time-series data of the skeleton information of the test subject, based on the operation input of the user. Specifically, the acquisition unit 501 may acquire the time-series data of the skeleton information of the test subject by receiving the time-series data from another computer.

For example, the acquisition unit 501 acquires a plurality of images obtained by imaging the subject from different angles at each of the plurality of consecutive time points. In a case where the acquisition unit 501 does not acquire the time-series data of the skeleton information of the subject and the time-series data is generated by the analysis unit 502, the acquisition unit 501 acquires the plurality of images. As a result, the acquisition unit 501 can allow the analysis unit 502 to generate the time-series data of the skeleton information of the subject.

For example, the acquisition unit 501 may acquire a plurality of images obtained by imaging the test subject from different angles at each of the plurality of consecutive time points. In a case where the acquisition unit 501 does not acquire the time-series data of the skeleton information of the test subject and the time-series data is generated by the analysis unit 502, the acquisition unit 501 acquires the plurality of images. As a result, the acquisition unit 501 can allow the analysis unit 502 to generate the time-series data of the skeleton information of the test subject.

The acquisition unit 501 may accept a start trigger to start the processing of any functional unit. The start trigger is a predetermined operation input by the user, for example. The start trigger may be, for example, reception of predetermined information from another computer. The start trigger may be, for example, output of predetermined information by any one of the functional units.

For example, the acquisition unit 501 may receive acquisition of a plurality of images as a start trigger to start processing of the analysis unit 502. For example, the acquisition unit 501 may receive acquisition of the time-series data of the skeleton information of the test subject, as a start trigger to start processing of the training unit 503. For example, the acquisition unit 501 may receive acquisition of the time-series data of the skeleton information of the subject, as a start trigger to start processing of the specification unit 504, the determination unit 505, the generation unit 506, and the correction unit 507.

The analysis unit 502 generates time-series data of skeleton information of a predetermined person. The analysis unit 502 generates, for example, the time-series data of the skeleton information of the subject. Specifically, the analysis unit 502 estimates a position of each portion of the subject at each time point, based on the plurality of images obtained by imaging the subject from the different angles at each of the plurality of time points and generates skeleton information of the subject including the estimated position. Specifically, the analysis unit 502 generates the time-series data of the skeleton information of the subject, based on the generated skeleton information of the subject. As a result, the analysis unit 502 can temporarily specify the position of each portion of the subject at each time point and can obtain a correction target.

The analysis unit 502 may generate, for example, the time-series data of the skeleton information of the test subject. Specifically, the analysis unit 502 generates the skeleton information of the test subject at each time point, based on the plurality of images obtained by imaging the test subject from the different angles at each of the plurality of time points and generates the time-series data of the skeleton information of the test subject. The analysis unit 502 may add noise to the generated time-series data of the skeleton information of the test subject. The analysis unit 502 sets the skeleton information of the test subject to teacher information used to generate a training model. As a result, the analysis unit 502 can obtain the teacher information used to generate the training model.

The training unit 503 trains a training model, based on the teacher information including the position of each of the plurality of portions of the test subject. The training model has a function for enabling to specify any one portion in an abnormal state regarding a position, from among a plurality of portions of the predetermined person, according to a feature amount regarding the skeleton information in the time-series data of the skeleton information of the predetermined person. The training model has, for example, a function for enabling to determine whether or not each portion of the predetermined person is in the abnormal state regarding the position.

Specifically, the training model has a function for calculating an index value indicating a magnitude of a probability that each portion of the predetermined person is in the abnormal state regarding the position. More specifically, the training model outputs the index value indicating the magnitude of the probability that each portion of the predetermined person is in the abnormal state regarding the position, according to an input of the feature amount regarding the skeleton information. Specifically, the training model is a neural network. As a result, the training unit 503 enables to specify any one portion in the abnormal state regarding the position, from among the plurality of portions of the subject.

The specification unit 504 specifies any one portion in the abnormal state regarding the position, for the skeleton information at the first time point in the acquired time-series data of the skeleton information of the subject, based on the feature amount regarding the skeleton information in the acquired time-series data of the skeleton information of the subject. For example, the specification unit 504 specifies any one portion in the abnormal state regarding the position, for the skeleton information at the first time point, based on the feature amount regarding the skeleton information in the acquired time-series data of the skeleton information of the subject, using the trained training model.

Specifically, the specification unit 504 calculates an index value indicating a magnitude of a probability that each portion of the subject in an abnormal state, for the skeleton information at the first time point, by inputting the feature amount regarding the skeleton information in the time-series data of the skeleton information of the subject, into the training model. Specifically, the specification unit 504 specifies any one portion in the abnormal state regarding the position, for the skeleton information at the first time point, based on the calculated index value. More specifically, the specification unit 504 specifies any one portion of which the calculated index value is equal to or more than a threshold as the portion in the abnormal state regarding the position, from among the plurality of portions of the subject. As a result, the specification unit 504 can obtain a guideline for correcting the position of each of the plurality of portions of the subject. The specification unit 504 enables to determine whether or not a position of which portion of the subject is preferably corrected.

For example, the specification unit 504 may specify any one portion in the abnormal state regarding the position, for the skeleton information at the first time point, based on the feature amount regarding the skeleton information in the acquired time-series data of the skeleton information of the subject, with reference to a predetermined rule. The predetermined rule includes, for example, a rule that enables to specify any one portion in the abnormal state regarding the position, from among the plurality of portions of the subject, according to the feature amount regarding the skeleton information in the time-series data of the skeleton information of the subject. Specifically, the predetermined rule may include a rule that enables to calculate the index value indicating the magnitude of the probability that each portion of the predetermined person is in the abnormal state regarding the position.

Specifically, the specification unit 504 calculates the index value indicating the magnitude of the probability that each portion of the subject is in the abnormal state, for the skeleton information at the first time point, based on the feature amount regarding the skeleton information in the time-series data of the skeleton information of the subject, with reference to the predetermined rule. Specifically, the specification unit 504 specifies any one portion in the abnormal state regarding the position, for the skeleton information at the first time point, based on the calculated index value. More specifically, the specification unit 504 specifies any one portion of which the calculated index value is equal to or more than a threshold as the portion in the abnormal state regarding the position, from among the plurality of portions of the subject. As a result, the specification unit 504 can obtain a guideline for correcting the position of each of the plurality of portions of the subject. The specification unit 504 enables to determine whether or not a position of which portion of the subject is preferably corrected.

The determination unit 505 determines a distribution model of the probability distribution that restricts the position of the specified portion, in the skeleton information at the first time point, based on the feature amount regarding the skeleton information in the acquired time-series data of the skeleton information of the subject. The distribution model is, for example, a model that restricts the position of any one portion, according to the index value indicating the magnitude of the probability that any one portion is in the abnormal state. As a result, the determination unit 505 can obtain the guideline for correcting the position of the portion specified by the specification unit 504.

The generation unit 506 generates a graph that includes a node indicating a position of each portion at each time point and a first edge that couples between nodes indicating positions of different portions that are biologically connected at each time point, and in which the determined distribution model is associated with the node indicating the position of the specified portion. As a result, the generation unit 506 enables to correct the skeleton information at the first time point in the time-series data of the skeleton information of the subject.

The generation unit 506 may generate a graph that includes the node, the first edge, and a second edge that couples between nodes indicating positions of any one portion at different time points, and in which the determined distribution model is associated with the node indicating the position of the specified portion. As a result, the generation unit 506 enables to correct the skeleton information at the first time point in the time-series data of the skeleton information of the subject.

The correction unit 507 corrects the skeleton information at the first time point in the time-series data of the skeleton information of the subject, based on the generated graph. The correction unit 507 corrects the skeleton information at the first time point in the time-series data of the skeleton information of the subject, for example, by optimizing the generated graph. As a result, the correction unit 507 enables to accurately specify the position of each portion of the subject, in consideration of the magnitude of the probability that each portion of the subject is in the abnormal state.

The output unit 508 outputs a processing result of at least any one of the functional units. Examples of an output format include display on a display, print output to a printer, transmission to an external device by the network I/F 303, and storage in a storage region such as the memory 302 or the recording medium 305. As a result, the output unit 508 may make it possible to notify a user of the processing result of at least any one of the functional units and may promote improvement in convenience of the information processing device 100.

For example, the output unit 508 outputs the skeleton information at the first time point corrected by the correction unit 507. Specifically, the output unit 508 transmits the skeleton information at the first time point corrected by the correction unit 507, to the client device 202. Specifically, the output unit 508 displays the skeleton information at the first time point corrected by the correction unit 507, on the display. As a result, the output unit 508 enables to use the position of each portion of the subject.

### (Operation Example of Information Processing Device 100)

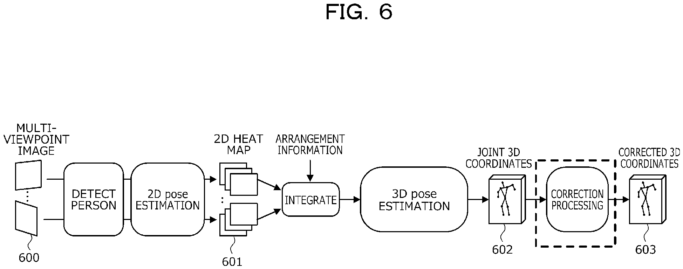

Next, an operation example of the information processing device 100 will be described with reference to FIGs. 6 to 12. First, for example, a flow of the operation of the information processing device 100 will be described with reference to FIG. 6.

FIG. 6 is an explanatory diagram illustrating the flow of the operation of the information processing device 100. In FIG. 6, the information processing device 100 acquires a plurality of multi-viewpoint images 600 obtained by imaging the subject from different angles at different time points. The information processing device 100 detects a region where the subject is imaged, from each multi-viewpoint image 600, by executing person detection processing, on each of the plurality of multi-viewpoint images 600.

The information processing device 100 executes 2 dimension (D) pose estimation processing, on each multi-viewpoint image 600, at each time point. The information processing device 100 generates a 2D heat map 601 indicating a distribution of an existence probability of each joint of the subject in each multi-viewpoint image 600, by executing the 2D pose estimation processing on each multi-viewpoint image 600, at each time point. The 2D heat map 601 includes, for example, a joint likelihood indicating the existence probability of any one joint of the subject, at each point in a 2D space corresponding to the multi-viewpoint image 600.

The information processing device 100 specifies 2D coordinates of the joint of the subject, in the multi-viewpoint image 600, based on the 2D heat map 601 indicating the distribution of the existence probability of each joint of the subject in each multi-viewpoint image 600, at each time point. A variance of the joint likelihood indicating the existence probability of the joint of the subject in the 2D heat map 601 can be treated as an index value representing accuracy of the specified 2D coordinates.

The information processing device 100 acquires arrangement information indicating the angle of each multi-viewpoint image 600, at each time point. The information processing device 100 specifies 3D coordinates of each joint of the subject, in a 3D space, by executing 3D pose estimation processing, based on the arrangement information and the 2D coordinates of each joint of the subject in each multi-viewpoint image 600, at each time point. The information processing device 100 generates a 3D skeleton inference result 602 including the specified 3D coordinates of each joint of the subject at each time point and generates time-series data of the 3D skeleton inference result 602.

The information processing device 100 corrects the 3D skeleton inference result 602, by executing correction processing, on the time-series data of the 3D skeleton inference result 602. The information processing device 100 outputs time-series data of a corrected 3D skeleton inference result 603 to be available. The information processing device 100 outputs, for example, the time-series data of the corrected 3D skeleton inference result 603 to be referred by the user.

The user executes predetermined analysis processing, based on the time-series data of the corrected 3D skeleton inference result 603. Specifically, a case is considered where the subject is a participant of an athletic meet. In this case, the analysis processing is, for example, scoring of a participant in a competition of the athletic meet. The user executes the analysis processing for scoring the participant, based on the time-series data of the corrected 3D skeleton inference result 603.

Specifically, a case is considered where the subject is an examinee of a medical institution that provides rehabilitations, a medical institution examinee who receives diagnosis regarding an exercise capacity such as a walking capacity, or the like. In this case, the analysis processing is, for example, rehabilitation effect determination, diagnosis of an exercise capacity or a health state, or the like. The user performs the rehabilitation effect determination of the examinee of the medical institution or diagnoses the exercise capacity or the health state of the medical institution examinee, based on the time-series data of the corrected 3D skeleton inference result 603.

The information processing device 100 may execute the above analysis processing, based on the time-series data of the corrected 3D skeleton inference result 603. The information processing device 100 outputs a result of executing the analysis processing, so that the user can refer to the result. The information processing device 100 may output the time-series data of the corrected 3D skeleton inference result 603 to the analysis unit 502 that executes the above analysis processing. For example, another computer other than the information processing device 100 includes the analysis unit 502. As a result, the information processing device 100 enables to accurately execute the analysis processing.

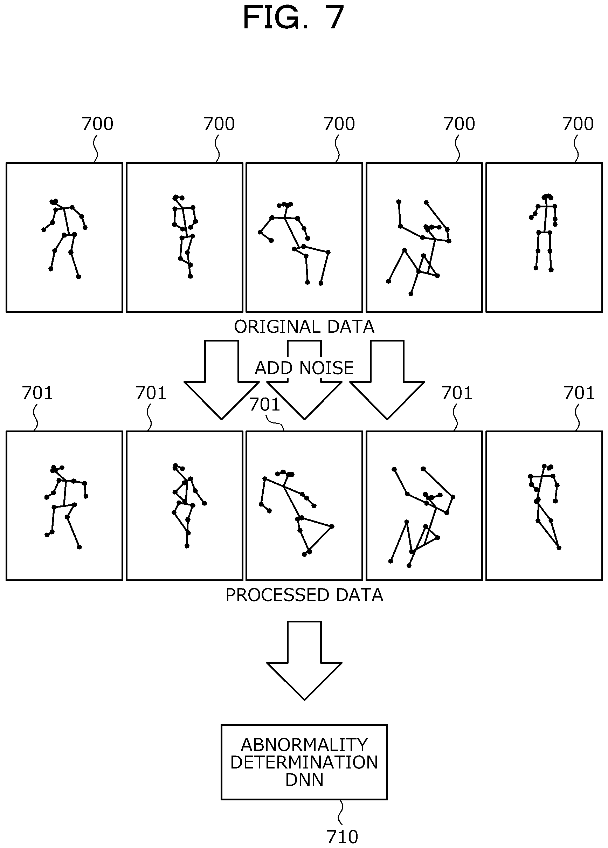

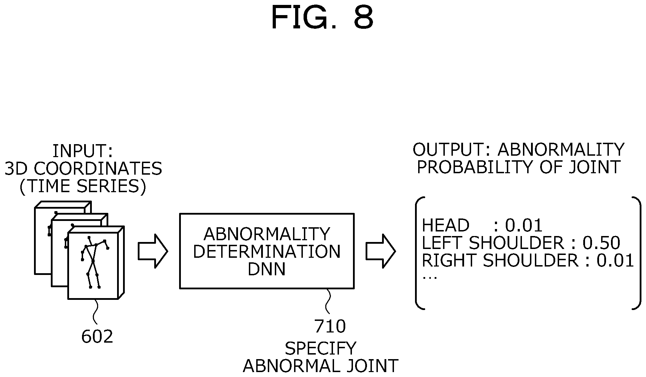

Next, a specific example of the correction processing will be described with reference to FIGs. 7 to 9. Specifically, first, with reference to FIGs. 7 and 8, a specific example will be described in which the information processing device 100 specifies an abnormal joint determined to be in an abnormal state regarding 3D coordinates, from among the plurality of joints of the subject.

FIGs. 7 and 8 are explanatory diagrams illustrating a specific example for specifying the abnormal joint. In FIG. 7, the information processing device 100 acquires time-series data of a plurality of pieces of original data 700. The original data 700 indicates skeleton information of a test subject. The original data 700 indicates 3D coordinates of each of a plurality of joints of the test subject. The 3D coordinates of the joint are, for example, indicated by • in FIG. 7.

The information processing device 100 generates processed data 701, by adding noise to the original data 700. For example, the information processing device 100 generates the processed data 701, by changing 3D coordinates of at least any one of the plurality of joints of the test subject indicated by the original data 700 into 3D coordinates determined to be in the abnormal state. The abnormal state corresponds to, for example, a state where the 3D coordinates of the joint are erroneously estimated. Specifically, the abnormal state is jitter, inversion, swap, miss, or the like. As a result, the information processing device 100 can acquire time-series data of the processed data 701.

The information processing device 100 trains an abnormality determination deep neural network (DNN) 710, using the time-series data of the processed data 701. For example, the abnormality determination DNN 710 has a function for outputting an abnormality probability of each joint of the subject, at least any one 3D skeleton inference result 602, according to an input of a feature amount of the 3D skeleton inference result 602 in the time-series data of the 3D skeleton inference result 602. The abnormality probability indicates a magnitude of a probability that the 3D coordinates of the joint of the subject are positionally in an abnormal state. For example, the abnormality determination DNN 710 may have a function for outputting the abnormality probability of each joint of the subject, in the entire time-series data, according to the input of the feature amount of the 3D skeleton inference result 602 in the time-series data of the 3D skeleton inference result 602. Next, description of FIG. 8 will be made.

In FIG. 8, the information processing device 100 inputs the feature amount of the 3D skeleton inference result 602 in the time-series data of the 3D skeleton inference result 602, into the abnormality determination DNN 710. The information processing device 100 acquires an abnormality probability of each joint of the subject, in the entire time-series data of the 3D skeleton inference result 602, output by the abnormality determination DNN 710 according to the input. The information processing device 100 specifies the abnormal joint, based on the acquired abnormality probability of each joint of the subject. For example, the information processing device 100 specifies any one joint of which the acquired abnormality probability is equal to or more than a threshold, as the abnormal joint, from among the plurality of joints of the subject.

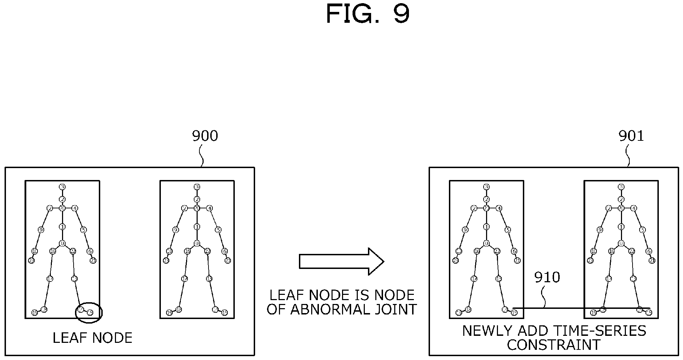

Here, a case has been described where the information processing device 100 specifies the abnormal joint using the abnormality determination DNN 710. However, the present embodiment is not limited to this. For example, there may be a case where the information processing device 100 specifies the abnormal joint on a rule basis. Specifically, the information processing device 100 may store a rule for calculating the abnormality probability of the joint, according to a magnitude of a difference between a feature amount regarding each joint and a threshold, in the 3D skeleton inference result 602. Specifically, it is considered that the information processing device 100 calculates the abnormality probability of each joint, with reference to the stored rule and specifies any one of the joints of which the calculated abnormality probability is equal to or more than the threshold, as the abnormal joint. Next, a specific example in which the information processing device 100 generates Factor Graph 900 will be described with reference to FIG. 9.

FIG. 9 is an explanatory diagram illustrating a specific example for generating the Factor Graph 900. In FIG. 9, the information processing device 100 generates the Factor Graph 900. The Factor Graph 900 includes, for example, a node indicating a position of each joint of the subject at each time point.

Specifically, the Factor Graph 900 includes a node indicating a position of each of a head, upper cervical spine, lower cervical spine, thoracic spine, lumbar spine, left and right hip joints, left and right knee joints, left and right leg joints, leg and right foot, left and right shoulder joints, left and right elbow joints, left and right wrists, and left and right hands of the subject, at each time point.

The information processing device 100 may generate Factor Graph 901, after coupling between nodes indicating positions of a predetermined joint at different time points with the second edge, in the Factor Graph 900. The second edge may be associated with Pairwise Term indicating a time-series constraint determined for each type of the joint, for example. The time-series constraint is defined, for example, by a probability distribution corresponding to an iso-position motion, a uniform linear motion, a uniform acceleration motion, or the like.

The Pairwise Term indicating the time-series constraint corresponding to the uniform linear motion is, for example, gt (x^{j, t-1}, x^{j, t}) to N (∥x^{j, t - 1}, x^{j, t}∥| vⱼ ^ Δt, Σᵥⱼ ^). In the following description, for convenience, there is a case where a character with ^ added to an upper side is referred to as a "character ^". The reference x^{j, t - 1} is an estimated position of a joint at a time t-1. The reference x^{j, t} is an estimated position of the joint at a time t. The reference vⱼ ^ is an average speed of the joint. The reference Δt is a unit time width. The reference Σᵥⱼ ^ is a velocity variance of the joint. A distribution model of the Pairwise Term indicating the time-series constraint corresponding to the iso-position motion is associated. The Pairwise Term is, for example, gt (x^{j, t - 1}, x^{j, t}) to N (∥x^{j, t - 1}, x^{j}, t∥| 0, Σₓⱼ ^). The reference Σₓⱼ ^ is a position variance of the joint.

The information processing device 100 may generate the Factor Graph 901, after coupling between leaf nodes, to which only one edge is coupled, indicating positions of the same joint at the different time points, by a third edge in the Factor Graph 900. The leaf node is, for example, a node to which only one first edge is coupled and no second edge is coupled.

For example, the information processing device 100 determines whether or not the leaf node to which only one first edge is coupled and no second edge is coupled, in the Factor Graph 900 is a node indicating the position of the specified abnormal joint. If the leaf node is the node indicating the position of the specified abnormal joint, the information processing device 100 couples the leaf nodes at different time points to each other, by a third edge 910.

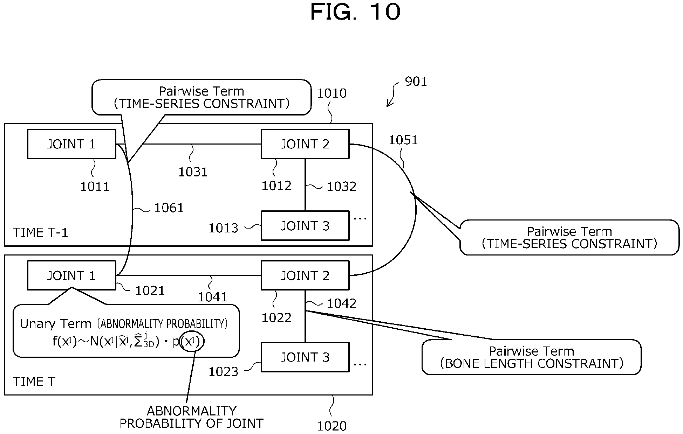

The third edge 910 may be associated with Pairwise Term indicating a predetermined time-series constraint. As a result, the information processing device 100 enables to accurately correct the position of the abnormal joint. Next, with reference to FIG. 10, a specific example will be described in which the information processing device 100 corrects the 3D skeleton inference result 602 using the generated Factor Graph 901.

FIG. 10 is an explanatory diagram illustrating a specific example for correcting the 3D skeleton inference result 602. In FIG. 10, the information processing device 100 corrects the 3D skeleton inference result 602, using the generated Factor Graph 901. In the example in FIG. 10, the Factor Graph 901 includes a node group 1010 corresponding to the time t-1, a node group 1020 corresponding to the time t, or the like. The node group 1010 includes nodes 1011 to 1013 or the like. The node group 1020 includes nodes 1021 to 1023 or the like.

For example, the nodes 1011 and 1012 are coupled by a first edge 1031. For example, the nodes 1012 and 1013 are coupled by a first edge 1032. For example, the nodes 1021 and 1022 are coupled by a first edge 1041. For example, the nodes 1022 and 1023 are coupled by a first edge 1042. For example, the first edge 1042 that couples the nodes 1022 and 1023 may be associated with Pairwise Term indicating a constraint of a bone length.

For example, the information processing device 100 may further couple the nodes 1012 and 1022 by a second edge 1051. The second edge 1051 may be associated with Pairwise Term indicating a time-series constraint determined for each type of the joint, for example. For example, the nodes 1011 and 1021 are coupled by a third edge 1061. The third edge 1061 may be associated with Pairwise Term indicating a predetermined time-series constraint, for example.

The information processing device 100 associates the node indicating the position of at least any one of the joints of the Factor Graph 901 with Unary Term indicating a constraint of the abnormal joint, that acts to restrict the position of the joint according to the abnormality probability of the joint. In the example in FIG. 10, for example, the information processing device 100 associates the node 1021 indicating the position of the joint 1 in the node group 1020 with Unary Term including an abnormality probability of the joint 1. The Unary Term is, for example, f (x^{j}) to N (x^{j} | x^{j} ^, Σ_{3D}^{j} ^)·p (x^{j}). The reference p (x^{j}) is an abnormality probability.

The information processing device 100 corrects the position of each joint at each time point, based on the Unary Term in the Factor Graph 901 and the Pairwise Term. The information processing device 100 corrects the position of each joint at each time point, for example, by optimizing the Factor Graph 901.

As a result, the information processing device 100 can accurately correct the 3D skeleton inference result 602. The information processing device 100 can accurately specify the position of each joint at each time point. For example, even in a case where the subject performs a relatively high speed or relatively complicated motion such as gymnastics, the information processing device 100 can specify the position of each joint of the subject at each time point, with a relatively high degree of certainty.

Here, with reference to Reference Document 3, a comparative example is considered where f (x^{j}) to N (x^{j} | x^{j} ^, Σ_{3D}^{j} ^) that does not include an abnormality probability is adopted as the Unary Term in the Factor Graph The reference x^{j} ^ is a weighted sum of a joint likelihood of a 3D heat map obtained by integrating the joint likelihoods of the plurality of 2D heat maps. The reference Σ_{3D}^{j} ^ is a variance of the joint likelihood of the 3D heat map obtained by integrating the joint likelihoods of the plurality of 2D heat maps.

Therefore, the comparative example acts so as to correct 3D coordinates of any one joint of which a joint likelihood is relatively low, with the Unary Term, with reference to 3D coordinates of another joint of which a likelihood is relatively high. However, in the comparative example, there is a case where it is difficult to accurately specify the 3D coordinates of each joint of the subject and it is difficult to accurately correct a temporal change in the 3D coordinates of each joint of the person. For example, it is not necessarily preferable to correct the 3D coordinates of any one joint of which the joint likelihood is relatively low, and it is not necessarily preferable to adopt the 3D coordinates of any one joint of which the joint likelihood is relatively high as a reference. Therefore, there is a case where it is not possible to appropriately correct the 3D coordinates of each joint of the subject, in the comparative example.

Reference Document 3: Bultmann, Simon, and Sven Behnke. "Real-time multi-view 3D human pose estimation using semantic feedback to smart edge sensors." arXiv preprint arXiv:2106.14729 (2021).

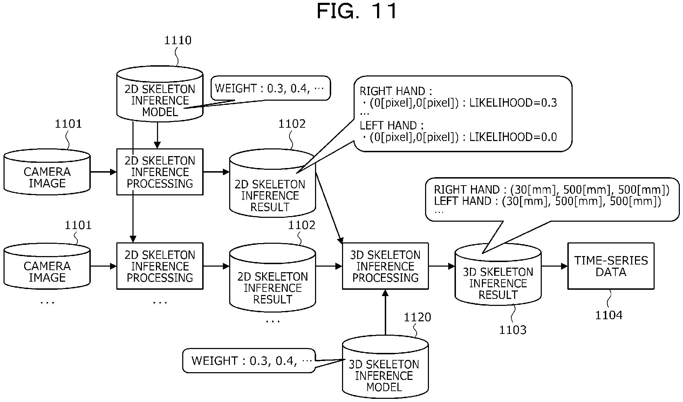

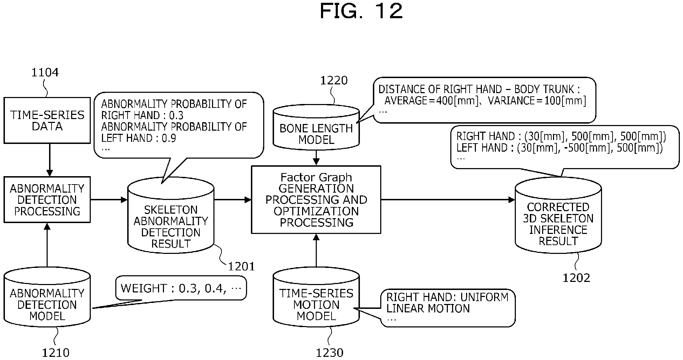

On the other hand, the information processing device 100 can adopt f (x^{j}) to N (x^{j} | x^{j} ^, Σ_{3D}^{j} ^)·p (x^{j}) including the abnormality probability, as the Unary Term in the Factor Graph 901. Therefore, the information processing device 100 can easily correct the 3D coordinates of the joint that is preferable to be corrected and easily fix the 3D coordinates of the joint that is preferable to be adopted as a reference. Therefore, the information processing device 100 can appropriately correct the 3D coordinates of each joint of the subject. Next, a specific example of a flow of data processing in the operation example will be described with reference to FIGs. 11 and 12.

FIGs. 11 and 12 are explanatory diagrams illustrating a specific example of the flow of the data processing in the operation example. As illustrated in FIG. 11, the information processing device 100 acquires a plurality of camera images 1101, at each time point. The information processing device 100 stores a 2D skeleton inference model 1110. The information processing device 100 stores, for example, a weight parameter that defines a neural network to be the 2D skeleton inference model 1110.

The information processing device 100 generates a 2D skeleton inference result 1102, by executing 2D skeleton inference processing, on each of the plurality of camera images 1101, with reference to the 2D skeleton inference model 1110, at each time point. The 2D skeleton inference result 1102 includes, for example, 2D coordinates (x [pixel], y [pixel]) indicating a position of a joint and a likelihood indicating certainty of the position of the joint.

The information processing device 100 stores a 3D skeleton inference model 1120. The information processing device 100 stores, for example, a weight parameter that defines a neural network to be the 3D skeleton inference model 1120.

The information processing device 100 generates a 3D skeleton inference result 1103, by executing 3D skeleton inference processing, on the plurality of 2D skeleton inference results 1102, with reference to the 3D skeleton inference model 1120, at each time point. The 3D skeleton inference result 1103 includes, for example, 3D coordinates (x [mm], y [mm], z [mm]) indicating a position of a joint. The information processing device 100 generates time-series data 1104 obtained by integrating the 3D skeleton inference result 1103 at each time point. Next, description of FIG. 12 will be made.

As illustrated in FIG. 12, the information processing device 100 stores an abnormality detection model 1210. The information processing device 100 stores, for example, a weight parameter that defines a neural network to be the abnormality detection model 1210.

The information processing device 100 calculates an abnormality probability for each joint, by executing abnormality detection processing, on the time-series data 1104, with reference to the abnormality detection model 1210 and generates a skeleton abnormality detection result 1201 including the calculated abnormality probability for each joint.

The information processing device 100 stores a bone length model 1220 and a time-series motion model 1230. The bone length model 1220 includes a parameter that defines the Pairwise Term indicating the constraint of the bone length. The parameter includes, for example, an average and a variance of the bone length. The time-series motion model 1230 includes Pairwise Term indicating a time-series constraint for each joint.

The information processing device 100 generates the Factor Graph by executing Factor Graph generation processing, with reference to the skeleton abnormality detection result 1201, the bone length model 1220, and the time-series motion model 1230. The information processing device 100 corrects the position of each joint, by executing optimization processing, on the generated Factor Graph. The information processing device 100 generates a corrected 3D skeleton inference result 1202 including the corrected position of each joint.

### (Overall Processing Procedure)

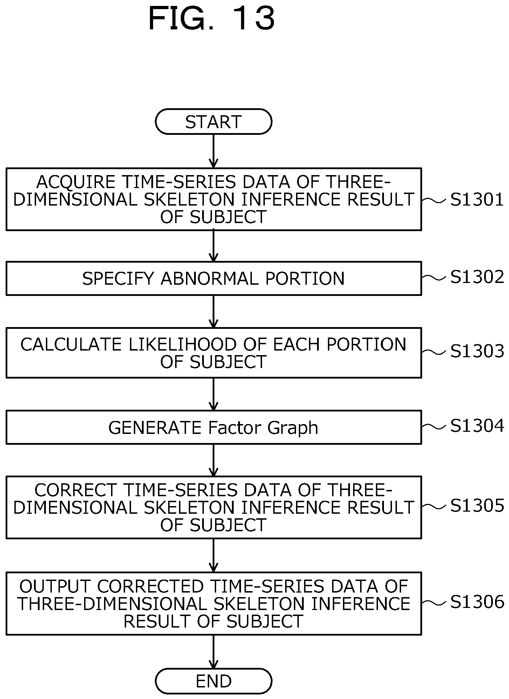

Next, an example of an overall processing procedure executed by the information processing device 100 will be described as an example with reference to FIG. 13. The overall processing is implemented by, for example, the CPU 301, the storage region such as the memory 302 or the recording medium 305, and the network I/F 303 illustrated in FIG. 3.

FIG. 13 is a flowchart illustrating an example of an overall processing procedure. In FIG. 13, the information processing device 100 acquires time-series data of a three-dimensional skeleton inference result of the subject (step S1301).

Next, the information processing device 100 calculates an abnormal degree of each portion of the subject, based on the acquired time-series data of the three-dimensional skeleton inference result of the subject and specifies an abnormal portion from among the plurality of portions of the subject, based on the calculated abnormal degree (step S1302). Then, the information processing device 100 calculates a likelihood of each portion of the subject, based on the abnormal degree of each portion of the subject (step S1303).

Next, the information processing device 100 sets Unary Term = likelihood to a specific portion of the subject and generates Factor Graph to which Pairwise Term is set along a time axis for the specific portion of the subject (step S1304). Then, the information processing device 100 corrects the time-series data of the three-dimensional skeleton inference result of the subject, by optimizing the Factor Graph (step S1305).

Next, the information processing device 100 outputs the corrected time-series data of the three-dimensional skeleton inference result of the subject (step S1306). Then, the information processing device 100 ends the overall processing. As a result, the information processing device 100 can accurately correct the three-dimensional skeleton inference result of the subject. Therefore, the information processing device 100 can improve usefulness of the three-dimensional skeleton inference result of the subject. For example, the information processing device 100 can improve accuracy of the analysis processing based on the three-dimensional skeleton inference result of the subject.

As described above, according to the information processing device 100, it is possible to acquire the time-series data of the skeleton information including the position of each of the plurality of portions of the subject. According to the information processing device 100, it is possible to specify any one portion in the abnormal state regarding the position, for the skeleton information at the first time point in the acquired time-series data, based on the feature amount regarding the skeleton information in the acquired time-series data. According to the information processing device 100, it is possible to determine the model of the probability distribution that restricts the position of the specified any one portion, according to the magnitude of the probability that the specified any one portion is in the abnormal state, in the skeleton information at the first time point. According to the information processing device 100, it is possible to generate the graph including the node indicating the position of each portion at each time point. According to the information processing device 100, in the graph, the first edge that couples between the nodes indicating the positions of the different portions that are biologically connected at each time point can be added. According to the information processing device 100, it is possible to associate the determined model with the node indicating the position of the specified any one portion, in the graph. According to the information processing device 100, it is possible to correct the skeleton information at the first time point in the time-series data, based on the generated graph. As a result, the information processing device 100 can accurately correct the skeleton information at the first time point.

According to the information processing device 100, it is possible to train the model that enables to specify any one portion in the abnormal state regarding the position, from among the plurality of portions of the subject, based on the teacher information including the position of each of the plurality of portions of the test subject. According to the information processing device 100, it is possible to specify any one portion in the abnormal state regarding the position, for the skeleton information at the first time point in the acquired time-series data, based on the feature amount regarding the skeleton information in the acquired time-series data, using the trained model. As a result, the information processing device 100 can accurately specify any one portion in the abnormal state regarding the position.

According to the information processing device 100, it is possible to store the rule that enables to specify any one portion in the abnormal state regarding the position, from among the plurality of portions of the subject, according to the feature amount regarding the skeleton information in the time-series data. According to the information processing device 100, it is possible to specify any one portion in the abnormal state regarding the position, for the skeleton information at the first time point in the acquired time-series data, based on the feature amount regarding the skeleton information in the acquired time-series data, with reference to the rule. As a result, the information processing device 100 can accurately specify any one portion in the abnormal state regarding the position.

According to the information processing device 100, it is possible to generate the graph including the node, the first edge, and the second edge that couples between the nodes indicating the position of any one portion at different time points. As a result, the information processing device 100 can easily and accurately correct the skeleton information at the first time point.

Note that the information processing method described in the present embodiment may be implemented by a computer such as a PC or a workstation executing a program prepared in advance. The information processing program described in the present embodiment is executed by being recorded in a computer-readable recording medium and being read from the recording medium by the computer. The recording medium is a hard disk, a flexible disk, a compact disc (CD)-ROM, a magneto optical disc (MO), a digital versatile disc (DVD), or the like. In addition, the information processing program described in the present embodiment may be distributed via a network such as the Internet.

### REFERENCE SIGNS LIST

100 information processing device
101 skeleton information
110 graph
111, 1011 to 1013, 1021 to 1023 node
112, 1031, 1032, 1041, 1042 first edge
200 information processing system
201 image capturing device
202 client device
210 network
300, 400 bus
301, 401 CPU
302, 402 memory
303, 403 network I/F
304, 404 recording medium I/F
305, 405 recording medium
306 display
307 input device
406 camera
500 storage unit
501 acquisition unit
502 analysis unit
503 training unit
504 specification unit
505 determination unit
506 generation unit
507 correction unit
508 output unit
600 multi-viewpoint image
601 2D heat map
602, 603, 1103, 1202 3D skeleton inference result
700 original data
701 processed data
710 abnormality determination DNN
900, 901 Factor Graph
910, 1061 third edge
1010, 1020 node group
1051 second edge
1101 camera image
1102 2D skeleton inference result
1104 time-series data
1110 2D skeleton inference model
1120 3D skeleton inference model
1201 skeleton abnormality detection result
1210 abnormality detection model
1220 bone length model
1230 time-series motion model

## Claims

1. An information processing program for causing a computer to execute processing comprising:
acquiring time-series data of skeleton information that includes a position of each of a plurality of portions of a subject;
specifying any one portion in an abnormal state regarding a position, for skeleton information at a first time point in the acquired time-series data, based on a feature amount regarding the skeleton information in the acquired time-series data;
determining a model of a probability distribution that restricts a position of the specified any one portion, in the skeleton information at the first time point, based on the feature amount regarding the skeleton information in the acquired time-series data, according to a magnitude of a probability that the specified any one portion is in the abnormal state;
generating a graph that includes a node that indicates a position of each portion at each time point and a first edge that couples between nodes that indicate positions of different portions biologically connected at each time point and in which the determined model is associated with the node that indicates the position of the any one portion; and
correcting the skeleton information at the first time point in the time-series data, based on the generated graph.

2. The information processing program according to claim 1, wherein a model is trained that enables to specify any one portion in the abnormal state regarding the position, from among the plurality of portions of the subject, according to the feature amount regarding the skeleton information in the time-series data, based on teacher information that includes a position of each of a plurality of portions of a test subject, and
the specifying processing
specifies the any one portion in the abnormal state regarding the position, for the skeleton information at the first time point in the acquired time-series data, based on the feature amount regarding the skeleton information in the acquired time-series data, by using the trained model.

3. The information processing program according to claim 1, wherein the specifying processing
specifies the any one portion in the abnormal state regarding the position, for the skeleton information at the first time point in the acquired time-series data, based on the feature amount regarding the skeleton information in the acquired time-series data, with reference to a rule that enables to specify the any one portion in the abnormal state regarding the position, from among the plurality of portions of the subject, according to the feature amount regarding the skeleton information in the time-series data.

4. The information processing program according to any one of claims 1 to 3, wherein the generating processing
generates a graph that includes the node, the first edge, and a second edge that couples between nodes that indicate the positions of the any one portion at different time points.

5. An information processing method for a computer to execute a process comprising:
acquiring time-series data of skeleton information that includes a position of each of a plurality of portions of a subject;
specifying any one portion in an abnormal state regarding a position, for skeleton information at a first time point in the acquired time-series data, based on a feature amount regarding the skeleton information in the acquired time-series data;
determining a model of a probability distribution that restricts a position of the specified any one portion, in the skeleton information at the first time point, based on the feature amount regarding the skeleton information in the acquired time-series data, according to a magnitude of a probability that the specified any one portion is in the abnormal state;
generating a graph that includes a node that indicates a position of each portion at each time point and a first edge that couples between nodes that indicate positions of different portions biologically connected at each time point and in which the determined model is associated with the node that indicates the position of the any one portion; and
correcting the skeleton information at the first time point in the time-series data, based on the generated graph.

6. An information processing device comprising:
a control unit configured to:
acquire time-series data of skeleton information that includes a position of each of a plurality of portions of a subject;
specify any one portion in an abnormal state regarding a position, for skeleton information at a first time point in the acquired time-series data, based on a feature amount regarding the skeleton information in the acquired time-series data;
determine a model of a probability distribution that restricts a position of the specified any one portion, in the skeleton information at the first time point, based on the feature amount regarding the skeleton information in the acquired time-series data, according to a magnitude of a probability that the specified any one portion is in the abnormal state;
generate a graph that includes a node that indicates a position of each portion at each time point and a first edge that couples between nodes that indicate positions of different portions biologically connected at each time point and in which the determined model is associated with the node that indicates the position of the any one portion; and
correct the skeleton information at the first time point in the time-series data, based on the generated graph.
